# EUROPEAN PATENT APPLICATION

(11) **EP 2 219 382 A1**
(43) Date of publication of application: **18.08.2010**
(21) Application number: 08857312.6
(22) Date of filing: 03.12.2008
(51) Int. Cl.: H04N 7/32, H04N 5/225, H04N 5/92

(54) **IMAGE CODER, VIDEO CAMERA, INTEGRATED CIRCUIT, AND IMAGE CODING METHOD**

(30) Priority: 06.12.2007 JP 2007315605
(71) Applicant: Panasonic Corporation, Kadoma-shi Osaka 571-8501 (JP)
(72) Inventor: MASUNO Takashi, Osaka 540-6207 (JP); JURI, Tatsuro, Osaka 540-6207 (JP); TSUDA, Kenjiro, Osaka 540-6207 (JP); SHIMAZAKI, Hiroaki, Osaka 540-6207 (JP); SAIGO Katsuo, Osaka 540-6207 (JP); KOBAYASHI, Yuki, Osaka 540-6207 (JP); CHIBA Takuma, Osaka 540-6207 (JP); SEKI Yukinaga, Osaka 540-6207 (JP)
(74) Representative: Kügele, Bernhard
(86) International application number: PCT/JP2008/003571
(87) International publication number: WO 2009/072276

(57) **Abstract**

An image coder with a pre-record function includes a coding unit (11) which codes a motion-picture signal to generate closed GOPs or open GOPs, a buffer unit (14) in which at least one of the GOPs generated by the coding unit (11) is stored in a first-in first-out manner, a user I/F unit (12a) which receives instructions to start or stop capturing a moving picture, and a recording control unit (12b) which, before the user I/F unit (12a) receives an instruction to start capturing a moving picture, establishes a non-recording status and causes the coding unit (11) to start and continue coding the motion-picture signal so as to generate a GOP sequence including a closed GOP, and when the user I/F unit (12a) receives the instruction, switches from the non-recording status to a non-recording status and causes the coding unit (11) to generate a GOP sequence including only open GOPs.

## Description

### [Technical Field]

The present invention relates to image coders which code moving-picture signals transmitted from imaging units and record the coded moving-picture signals on recording media, and digital video cameras which are provided with the image coders.

### [Background Art]

In moving-picture recording using a conventional digital video camera, coding and recording of a moving picture is started by a user's instruction to start recording such as operation of a record button (see Patent Literature 1).

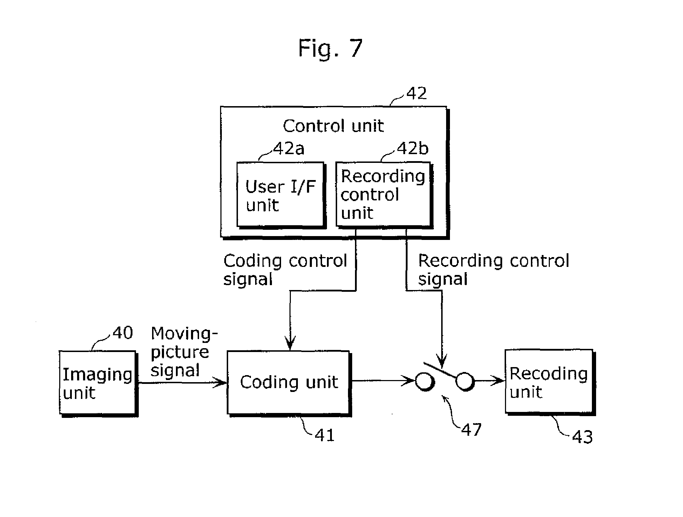

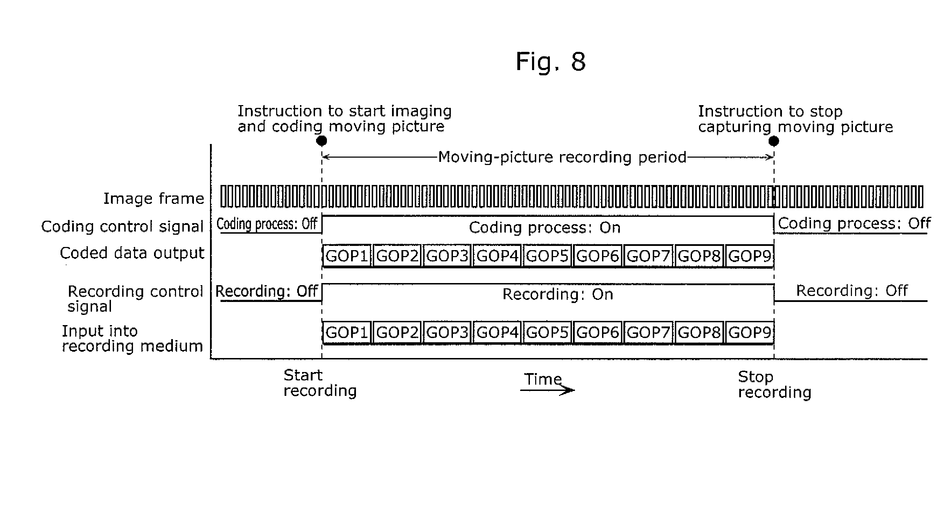

Fig. 7 shows a configuration of a conventional digital video camera. Fig. 8 shows timing of controlling recording operation of the conventional digital video camera shown in Fig. 7.

As shown in Fig. 7, the conventional digital video camera includes an imaging unit 40, a coding unit 41, a control unit 42, a recording unit 43, and a data switch 47.

The imaging unit 40 is a camera unit which includes an optical mechanism and an imaging device and provides a moving-picture signal having a predetermined frame rate to the coding unit 41.

The control unit 42 includes a user interface (I/F) unit 42a and a recording control unit 42b. The user I/F unit 42a receives information on an operation by a user of the digital video camera to instruct to start or stop of capturing a moving picture, such as information on pressing or releasing of a record button by a user. The recording control unit 42b provides control signals to respective components based on the information on the operation by the user.

The coding unit 41 codes, with a Group of Picture (GOP) structure, the moving-picture signal provided from the imaging unit 40 according to a coding control signal provided from the recording control unit 42b, and then outputs coded data.

The data switch 47 switches between on and off to allow and interrupt input of the coded data from the coding unit 41 into the recording unit 43 according to a recording control signal provided from the recording control unit 42b.

The recording unit 43 records the coded data which has passed through the data switch 47 on a recording medium.

In the conventional digital video camera with this configuration, the moving-picture signal outputted from the imaging unit 40 is coded by the coding unit 41 and recorded by the recording unit 43 during a period from the user's instruction to start capturing and recording a moving picture until the user's instruction to stop the capturing and recording a moving picture as shown in Fig. 8. A user who uses such a digital video camera which records a moving picture only after the user's instruction to start recording a moving picture may miss a video-opportunity.

In this context, some digital video cameras have been recently developed which are provided with what is called a pre-record function. A digital video camera with a pre-record function starts capturing a moving picture and performing a coding process before an instruction of a user of the digital video camera to start capturing a moving picture and stores data which is coded in a predetermined period. The digital video camera records the coded data stored at the time of receiving the user's instruction to start capturing a moving picture and data coded after the instruction. Such a digital video camera thus records a moving picture before the user's instruction to start capturing a moving picture, thereby allowing the user to avoid missing a video-opportunity. The following describes a conventional digital video camera having such a pre-record function.

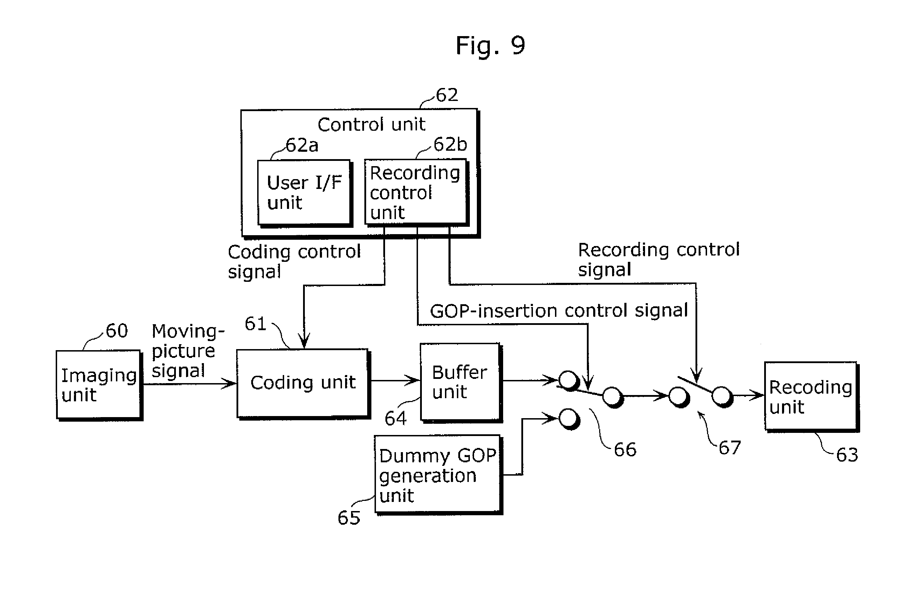

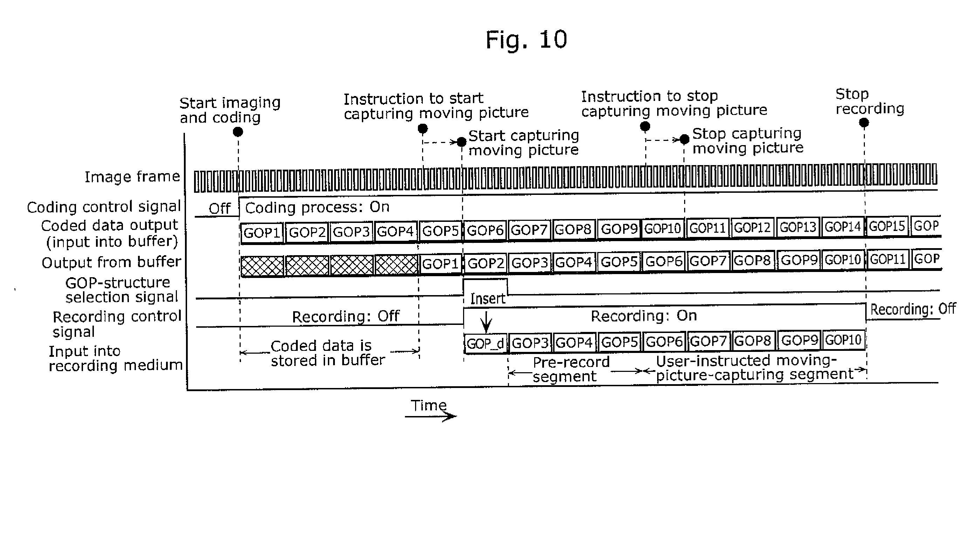

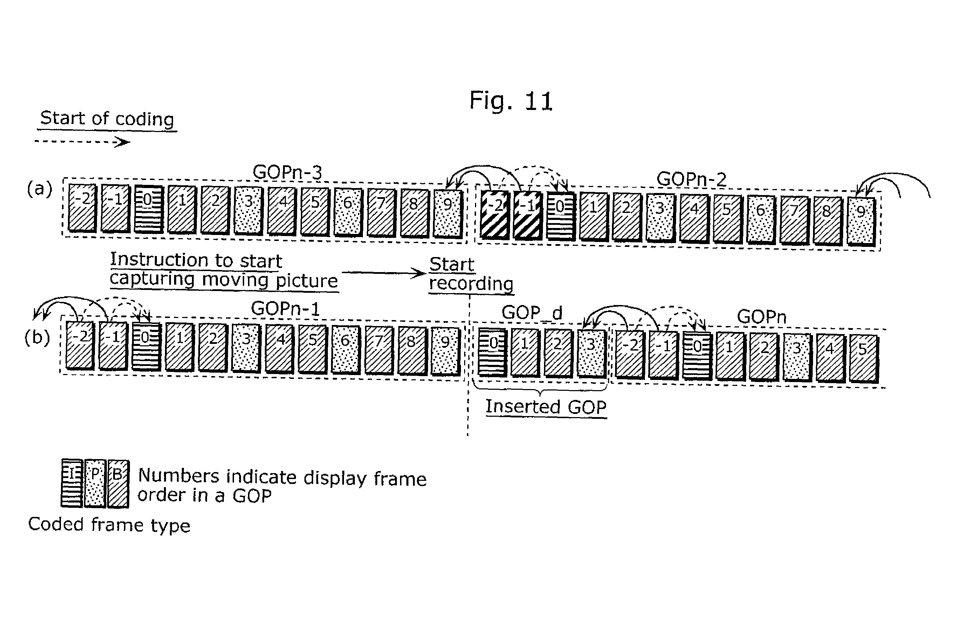

Fig. 9 shows a configuration of a conventional digital video camera with a pre-record function. Fig. 10 shows timing of controlling recording operation of the conventional digital video camera shown in Fig. 9. Fig. 11 shows a GOP structure used in a coding process by the digital video camera shown in Fig. 9.

As shown in Fig. 9, the conventional digital video camera with a pre-record function includes an imaging unit 60, a coding unit 61, a control unit 62, a recording unit 63, a buffer unit 64, a dummy-GOP generation unit 65, a coded data selection unit 66, and a data switch 67.

The imaging unit 60 is a camera unit which includes an optical mechanism and an imaging device and provides a moving-picture signal having a predetermined frame rate to the coding unit 61. The coding unit 61 codes, with a predetermined GOP structure, the moving-picture signal provided from the imaging unit 60 according to a coding control signal provided from the recording control unit 62, and then outputs coded data. In this coding process, an open GOP structure is used for inter picture coding in which a B picture at the beginning of a GOP uses a referenced picture in the immediately preceding GOP. For example, a B picture which is at the beginning of a GOPn-2 and denoted by -2 references a picture 9 included in a GOPn-3 which immediately precedes the GOPn-2 as shown in (a) of Fig. 11.

There are two types of GOP: open GOP and closed GOP. An open GOP includes pictures which reference pictures included in an immediately preceding GOP, thereby providing an advantage of enhancing picture quality. On the other hand, a closed GOP includes no picture which references a picture included in other GOPs, thereby providing an advantage that there is no constraint on editing on a GOP basis.

The control unit 62 includes a user I/F unit 62a and a recording control unit 62b. The user I/F unit 62a receives information on an operation by a user of the digital video camera to instruct to start or stop of capturing a moving picture, such as information on pressing or releasing of a record button by a user. The recording control unit 62b provides control signals to the respective components based on the information the operation by the user.

The coding unit 61 codes, with an open GOP structure, the moving-picture signal provided from the imaging unit 60 according to a coding control signal provided from the recording control unit 62b, and then outputs coded data. The outputted coded data is stored in a buffer unit 64, which is a first-in first-out buffer, for a certain period of time.

The dummy-GOP generation unit 65 generates a dummy GOP having a closed GOP structure in which each picture is entirely gray or black.

The coded data selection unit 66 selects, according to a GOP insertion control signal provided from the recording control unit 62b, either coded data outputted from the buffer unit 64 or a dummy GOP generated by the dummy-GOP generation unit 65 to provide selected one to the recording unit 63.

The data switch 67 switches between on and off to allow and interrupt input of the GOP from the coded data selection unit 66 into the recording unit 63 according to a recording control signal provided from the recording control unit 42b.

The recording unit 43 records the coded data which has passed through the data switch 47 on a recording medium.

With this configuration, the conventional digital video camera with a pre-record function operates according to control timing as shown in Fig. 10.

First, when a user of the digital video camera performs an operation to give an instruction, such as an instruction to switch to moving-picture capturing mode, the instruction is received by the user I/F unit 62a. Next, to start pre-recording, the recording control unit 62b transmits a coding control signal to the coding unit 61 according to the received instruction so as to instruct to start imaging and a coding process. Then, a moving-picture signal is coded (in order of GOP1, GOP2, GOP3, GOP4... as illustrated in Fig. 10) with the open GOP structure shown in (a) of Fig. 11 and accumulated in the buffer unit 64. After a delay time corresponding to a capacity of the buffer unit 64, the accumulated coded data becomes ready to be outputted in order of the accumulation.

When the user of the digital video camera performs an operation to give an instruction to start capturing a moving picture, the instruction is received by the user I/F unit 62a. Then, the recording control unit 62b transmits a GOP-insertion control signal to the coded data selection unit 66 according to the received instruction so as to instruct to replace a GOP immediately after the instruction to start capturing a moving picture (the GOP is the GOP2 shown in Fig. 10) with a dummy GOP (GOP_d) provided from the dummy-GOP generation unit 65. At the same time, the recording control unit 62b transmits the recording control signal to the data switch 67 so that recoding into the recording unit 63 is started with the dummy GOP (GOP_d) and continued with a GOP sequence starting with the GOP3 immediately after the GOP2.

When the user of the digital video camera performs an operation to give an instruction to stop capturing a moving picture, the instruction is received by the user I/F unit 62a. Then, the recording control unit 62b keeps the recording control signal effective according to the received instruction until the recording unit 63 finishes recording all the GOPs up to a GOP which the coding unit 61 is then coding (the GOP is the GOP10 shown in Fig. 10).

The coded data thus recorded has a GOP structure (GOP_d, GOP3, GOP4...) which is indicated by "Start of recording" in (b) of Fig. 11. Since a dummy GOP (GOP_d) is prepended, the coded data necessarily starts with a closed GOP. This solves a problem that recoding of the coded data is started with an open GOP which lacks a reference picture. In other words, this causes a GOPn which follows a dummy GOP to reference pictures in the dummy GOP, which is built up of pictures entirely gray or black. The moving picture is thereby decoded and reproduced with reduced distinct visual noise.

### [Citation List]

[Patent Literature]
[PTL 1] Japanese Unexamined Patent Application Publication No. 10-262259

### [Summary of Invention]

### [Technical Problem]

However, these is a problem that an unnecessary dummy picture is displayed and picture quality of the beginning of a GOP which follows the dummy picture is degraded because the conventional digital video camera with a pre-record function shows a result of decoding of the dummy GOP (GOP_d), which is a group of dummy pictures, when recoded coded data is decoded.

The present invention, conceived to address the problem, has an object of providing an image coder and a video camera which have a pre-record function and records on recording media coded data not with unnecessary pictures but with a GOP having a correct reference structure free from degradation in picture quality so that users are provided with a high quality decoded picture.

### [Solution to Problem]

In order to address this problem, the image coder according to the present invention which codes a moving-picture signal transmitted from an imaging unit and records the coded moving-picture signal on a recording medium includes: a coding unit configured to code the moving-picture signal so as to generate groups of pictures (GOPs), each of the GOPs being a closed GOP or an open GOP; a buffer unit in which at least one of the GOPs generated by the coding unit is stored in a first-in first-out manner; a user interface unit configured to receive an instruction to start capturing a moving picture and an instruction to stop capturing a moving picture; and a recording control unit configured to (1) control the coding unit and (2) establish one of a recording status and a non-recording status according to the respective instructions received by the user interface unit, the recording status being a status in which the GOPs outputted from the buffer unit are recorded on the recording medium, and the non-recording status being a status in which the GOPs are not recorded on the recording medium, wherein the recording control unit is configured to, before the user interface unit receives the instruction to start capturing a moving picture, establish the non-recording status and cause the coding unit to start and continue coding the moving-picture signal so that the coding unit generates a GOP sequence which includes a closed GOP, and when the user interface unit receives the instruction to start capturing a moving picture, switch from the non-recording status to the recording status and cause the coding unit to generate a GOP sequence which includes only open GOPs.

The GOP sequence recorded on the recording medium thereby necessarily starts with the closed GOP. The process of inserting a dummy GOP necessary for the conventional technique is thus no longer needed.

The present invention may be implemented not only as an image coder but also as a digital video camera provided with such an image coder, a picture coding method, a program which causes a computer to execute steps included in the picture coding method, or a computer-readable recording medium such as a CD-ROM on which the program is recorded.

### [Advantageous Effects of Invention]

According to the present invention, coded data recorded on a recording medium includes no unnecessary picture and thus recorded with a GOP having a correct reference structure which causes no degradation in picture quality, so that users are provided with a high quality decoded picture.

The present invention thus provides an image coder and a digital video camera with a pre-record function which reproduce clear pictures free from degradation in picture quality. The present invention has a considerable utility in today's situation where digital video cameras have gained popularity.

### [Brief Description of Drawings]

[Fig. 1] Fig. 1 is a block diagram of a digital video camera according to one embodiment of the present invention.
[Fig. 2] Fig. 2 is a timing chart illustrating operation of the digital video camera.
[Fig. 3] Fig. 3 illustrates structures of GOPs generated in the digital video camera.
[Fig. 4] Fig. 4 is a state transition diagram which shows operation of the digital video camera.
[Fig. 5] Fig. 5 is a timing chart illustrating timing of operation of the digital video camera according to another embodiment of the present invention.
[Fig. 6] Fig. 6 shows exemplary applications of the image coder and the video camera according to the present invention.
[Fig. 7] Fig. 7 is a block diagram of a conventional digital video camera.
[Fig. 8] Fig. 8 is a timing chart illustrating operation of the conventional digital video camera.
[Fig. 9] Fig. 9 is a block diagram of a conventional digital video camera with a pre-record function.
[Fig. 10] Fig. 10 is a timing chart illustrating operation of the conventional digital video camera with a pre-record function.
[Fig. 11] Fig. 11 illustrates structures of GOPs generated by the conventional digital video camera with a pre-record function.

### [Reference Signs List]

- 10: Imaging unit
- 11: Coding unit
- 12: Control unit
- 12a: User I/F unit
- 12b: Recording control unit
- 13: Recording unit
- 14: Buffer unit
- 17: Data switch
- 20: Digital video camera
- 22: Image coder

### [Description of Embodiments]

An image coder according to the present invention which codes a moving-picture signal transmitted from an imaging unit and records the coded moving-picture signal on a recording medium includes: a coding unit configured to code the moving-picture signal so as to generate groups of pictures (GOPs), each of the GOPs being a closed GOP or an open GOP; a buffer unit in which at least one of the GOPs generated by the coding unit is stored in a first-in first-out manner; a user interface unit configured to receive an instruction to start capturing a moving picture and an instruction to stop capturing a moving picture; and a recording control unit configured to (1) control the coding unit and (2) establish one of a recording status and a non-recording status according to the respective instructions received by the user interface unit, the recording status being a status in which the GOPs outputted from the buffer unit are recorded on the recording medium, and the non-recording status being a status in which the GOPs are not recorded on the recording medium, wherein the recording control unit is configured to, before the user interface unit receives the instruction to start capturing a moving picture, establish the non-recording status and cause the coding unit to start and continue coding the moving-picture signal so that the coding unit generates a GOP sequence which includes a closed GOP, and when the user interface unit receives the instruction to start capturing a moving picture, switch from the non-recording status to the recording status and cause the coding unit to generate a GOP sequence which includes only open GOPs.

A GOP sequence including a closed GOP is thereby generated in the pre-recording, and a GOP sequence recorded on the recording medium starts with a closed GOP. The process of inserting a dummy GOP necessary for the conventional technique is thus no longer needed. This eliminates the need for recording an unnecessary GOP and prevents generation of visual noise due to an inserted dummy GOP in reproduction of a moving picture.

It is preferable that the recording control unit be configured to, when the user interface unit receives the instruction to stop capturing a moving picture, hold the recording status until all of the at least one GOP then stored in the buffer unit is recorded on the recording medium, and then, when the recoding of all of the at least one GOP is completed, switch from the recording status to the non-recording status. With this, the image coder reliably codes and records the moving picture captured up to when a user instructs to stop capturing the moving picture.

Here, the recording control unit may be configured to, before the user interface unit receives the instruction to start capturing a moving picture, cause the coding unit to generate a GOP sequence which includes only closed GOPs. Furthermore, the recording control unit may be configured to, when the user interface unit receives the instruction to start capturing a moving picture, switch from the non-recording status to the recording status and cause the coding unit to generate a GOP sequence which includes only open GOPs, so that a GOP sequence starting with a closed GOP which is an initial closed GOP to be outputted from the buffer unit after the reception of the instruction, is recorded on the recording medium. With this, the image coder records the moving picture so that the recorded moving picture reliably has a closed GOP at the beginning thereof even when both closed GOPs and open GOPs are generated in the coding of pre-recording in favor of picture quality.

Furthermore, the recording control unit is configured to, before the user interface unit receives the instruction to start capturing a moving picture, cause the coding unit to start coding the moving-picture signal when the recording control unit detects an event which has occurred inside or outside of the image coder. For example, it is preferable that the pre-recording be started when a user has instructed to switch to moving-picture capturing mode or when the image coder has become ready to receive an instruction to start capturing a moving picture.

Furthermore, it is preferable that the recording control unit be configured to switch between the recording status and the non-recording status by switching between a status in which GOPs outputted from the buffer unit are inputted into a recording unit which records the GOPs on the recording medium and a status in which GOPs outputted from the buffer unit are not inputted into the recording unit. With this, timing for input into the recording unit is controlled by the recording control unit as necessary, and thus the image coder reliably starts recording with a picture at the beginning of a closed GOP.

The following describes one embodiment of the present invention with reference to drawings.

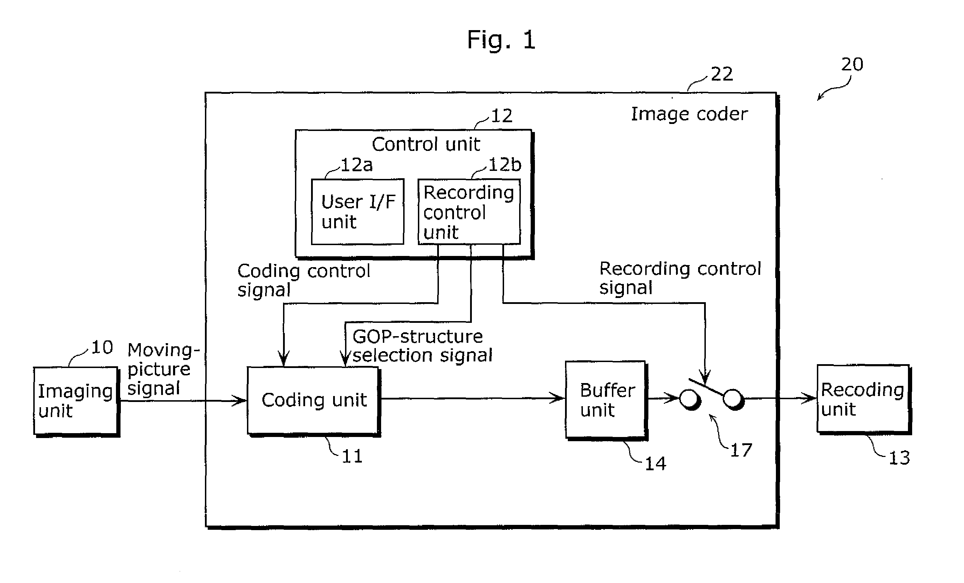

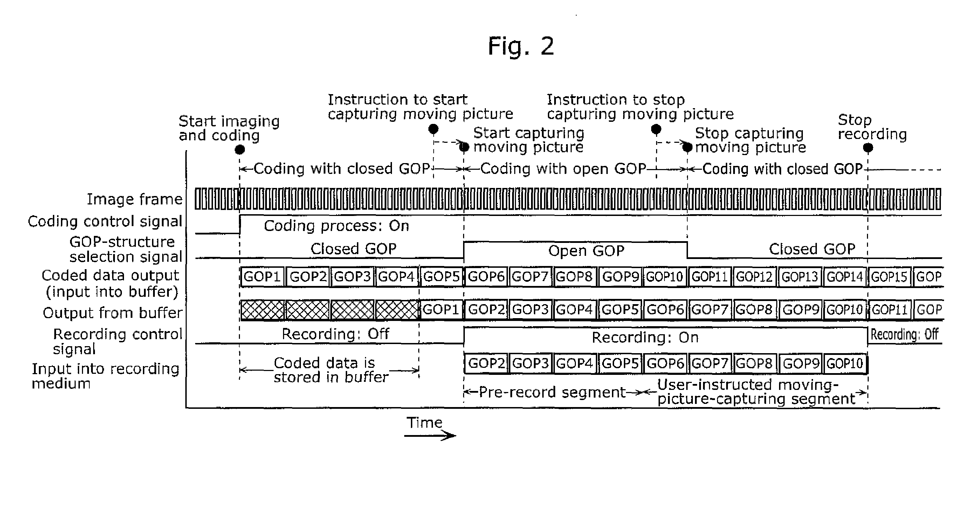

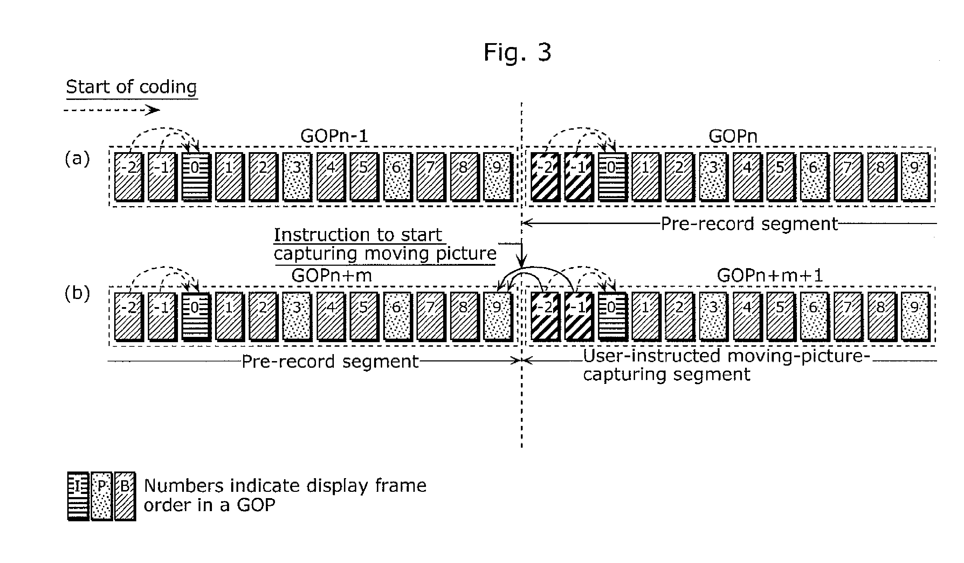

Fig. 1 is a functional block diagram which shows a configuration of a digital video camera 20 according to the one embodiment of the present invention. Fig. 2 shows timing of controlling recording operation of the conventional digital video camera 20 according to the one embodiment of the present invention shown in Fig. 1. Fig. 3 shows a GOP structure in a coding process by the digital video camera 20.

As shown in Fig. 1, the digital video camera 20 is a digital video camera with a pre-record function and includes an imaging unit 10, an image coder 22, and a recording unit 13.

The imaging unit 10 is a camera unit or the like which includes an optical mechanism and an imaging device and provides a moving-picture signal having a predetermined frame rate to the image coder 22.

The image coder 22 is a processing unit which codes a moving-picture signal provided from the imaging unit 10 and transmits resulting coded data to the recording unit 13. The image coder 22 includes a coding unit 11, a control unit 12, a buffer unit 14, and a data switch 17.

The coding unit 11 is a video encoder which codes, according to the MPEG standards, the moving-picture signal transmitted from the imaging unit 10 so as to generate a closed GOP or an open GOP.

The buffer unit 14 is a memory in which at least one (four in the present embodiment) of the GOPs generated by the coding unit 11 is stored in a first-in first-out manner.

The control unit 12 includes a user I/F unit 12a which receives from a user an instruction to start capturing a moving picture and a n instruction to stop capturing a moving picture, and a recording control unit 12b which (1) controls the coding unit 11 and (2) establishes one of a recording status and a non-recording status according to the respective instructions received by the user I/F unit 12a. In the recording status, GOPs outputted from the buffer unit 14 are recorded on a recording medium. In the non-recording status, GOPs are not recorded on a recording medium.

The recording control unit 12b establishes the non-recording status and causes the coding unit 11 to start and continue coding a moving-picture signal for the purpose of pre-recording before the user I/F unit 12a receives an instruction to start capturing a moving picture, so that the coding unit 11 generates a GOP sequence which includes a closed GOP. On the other hand, when the user I/F unit 12a receives an instruction to start capturing a moving picture, the recording control unit 12b switches from the non-recording status to the recording status and causes the coding unit 11 to generate a GOP sequence which includes only open GOPs. When the user I/F unit 12a receives an instruction to stop capturing a moving picture, the recording control unit 12b holds the recording status until all the GOPs then stored in the buffer unit 14 are recorded on the recording medium, and switches from the recording status to the non-recording status when the recoding of all the GOPs is completed.

By way of more specific example, the recording control unit 12b causes the coding unit 11 to generate a GOP sequence which includes only closed GOPs for the purpose of pre-recording before the user I/F unit 12a receives an instruction to start capturing a moving picture. On the other hand, when the user I/F unit 12a receives an instruction to start capturing a moving picture, the recording control unit 12b switches from the non-recording status to the recording status, so that a GOP sequence which starts with an initial closed GOP to be outputted from the buffer after the instruction, is recorded on a recording medium.

Before the user I/F unit 12a receives an instruction to start capturing a moving picture, the recording control unit 12b causes the coding unit 11 to start coding a moving-picture signal for the purpose of pre-recording when the recording control unit 12b detects an event which has occurred inside or outside of the image coder and allows the user to instruct to start capturing a moving picture, for example, when the user has instructed to switch to moving-picture capturing mode, when the user has turned on the image coder, or when a capture-starting button has become ready to be pressed. Here, a user's instruction, such as the instruction to switch to moving-picture capturing mode or start or stop capturing a moving picture, is performed by an operation such as pressing a record-starting button or function buttons provided on the digital video camera 20.

The data switch 17 switches between on and off to allow and interrupt input of the GOP from the buffer unit 14 into the recording unit 13 according to a recording control signal provided from the recording control unit 12b. In other words, the data switch 17 switches between the recording status and the non-recording status by switching between a status in which GOPs outputted from the buffer unit 14 are inputted into the recording unit 13 and a status in which GOPs outputted from the buffer unit 14 are not inputted into the recording unit 13 according to the recording control signal provided from the recording control unit 12b.

Although the data switch 17 is illustrated as a switch inserted in a signal line which connects the buffer unit 14 and the recording unit 13 in the present embodiment, this merely represents a function of the data switch 17. The data switch 17 may be practically implemented as an independent gate circuit which allows and interrupts data to pass through the gate circuit, an output gate circuit provided in (the output side of) the buffer unit 14, an input gate circuit provided in (the input side of) the recording unit 13, or a program equivalent to one of these gate circuit.

The recording unit 43 is a drive unit which records on a recording medium the GOP which has passed through the data switch 17.

The image coder 22 or the control unit 12 and the coding unit 11 included in the image coder 22 is preferably implemented as a one-chip semiconductor integrated circuit. Circuitry of the imaging unit 10 or the recording unit 13 may be included in the semiconductor integrated circuit.

The following describes operation of the digital video camera 20 according to the one embodiment of the present invention.

Control timing for each of the components is described below with reference to Fig. 2 and Fig. 3.

First, when a user of the digital video camera 20 performs an operation to give an instruction, such as an instruction to switch to moving-picture capturing mode, the instruction is received by the user I/F unit 12a. Next, to start pre-recording, the recording control unit 12b transmits a coding control signal and a GOP-structure selection signal to the coding unit 11 according to the received instruction so as to instruct to start imaging and a coding process and generate GOPs having a closed GOP structure. As a result, the coding unit 11 codes a moving-picture signal (in order of GOP1, GOP2, GOP3, GOP4... as illustrated in Fig. 2) with the closed GOP structure shown in (a) of Fig. 3, and coded data resulting from the coding is accumulated in the buffer unit 14.

After a delay time corresponding to a capacity of the buffer unit 14 (a capacity of four GOPs in the present embodiment), the accumulated coded data becomes ready to be outputted in order of inputting, that is, in a first-in first-out manner.

The status of the data switch 17 thus far remains off (in other words, the non-recording status is kept so that none of the GOPs outputted from the buffer unit 14 is inputted into the recording unit 13). In this status, the GOPs outputted from the buffer unit 14 are abandoned when the delay time corresponding to the capacity of the buffer unit 14 (a capacity of four GOPs in the present embodiment) has elapsed. It is to be noted that the closed GOP structure is used in the coding in pre-recording in order to ensure starting recording with a closed GOP for any one of the GOPs outputted from the buffer unit 14, in other words, in order to eliminate the need for insertion of a dummy GOP.

Next, when the user of the digital video camera 20 performs an operation to give an instruction to start capturing a moving picture, the instruction is received by the user I/F unit 12a. Then, the recording control unit 12b transmits a GOP-structure selection signal to the coding unit 11 according to the received instruction so as to instruct to perform a coding process to generate open GOPs. As a result, coding with the open GOP structure as shown in (b) of Fig. 3 is started with a GOP immediately after the instruction to start capturing a moving picture (GOP6 shown in Fig. 2). (b) of Fig. 3 shows that a B picture which is at the beginning of an open GOPn+m+1 and denoted by -2 references a P picture which is included in an immediately preceding closed GOPn+m and denoted by 9. It is to be noted that the open GOP structure is used in the coding after the instruction to start capturing in order to perform coding to achieve higher picture quality.

At the same time as the instruction using the GOP-structure selection signal, the recording control unit 12b transmits a recording control signal to the data switch 17 to switch to on (in other words, to the non-recording status so that GOPs outputted from the buffer unit 14 are inputted into the recording unit 13). As a result, GOPs in a GOP sequence starting from a GOP to be recorded (a GOP2 shown Fig. 2), in other words, GOPs outputted from the buffer unit 14 are sequentially recorded in the recording unit 13.

Finally, when the user of the digital video camera 20 performs an operation to give an instruction to stop capturing a moving picture, the instruction is received by the user I/F unit 12a. Next, the recording control unit 12b transmits a recording control signal to the data switch 17 according to the received instruction so as to instruct to remain on so that all the GOPs to be recorded, which include GOPs up to the one currently being coded (a GOP10 in Fig. 2) in the coding unit 11, is completely recorded in the recording unit 13. The recording control unit 12b then turns off the data switch 17.

As shown in (a) and (b) of Fig. 3, the coded data thus recorded includes data recorded in a pre-record segment which is a period of time of preparation for moving-picture capturing and data recorded in a user-instructed moving-picture-capturing segment which follows the pre-record segment. In other words, the GOPs from a GOPn (the GOP2 in the present embodiment) to the GOPn+m (the GOP5 in the present embodiment) stored in the buffer unit 14 have the closed GOP structure, and subsequent GOPs from the GOPn+m+1 (the GOP6 in the present embodiment) is coded and recorded with the open GOP structure.

Consequently, the digital video camera 20 according to the present embodiment starts recording GOPs necessarily with a closed GOP, and thus there is no need for prepending a dummy GOP to the GOPs. The recorded coded data is thus decoded with picture quality free from degradation due to a dummy GOP (or replacement of reference pictures).

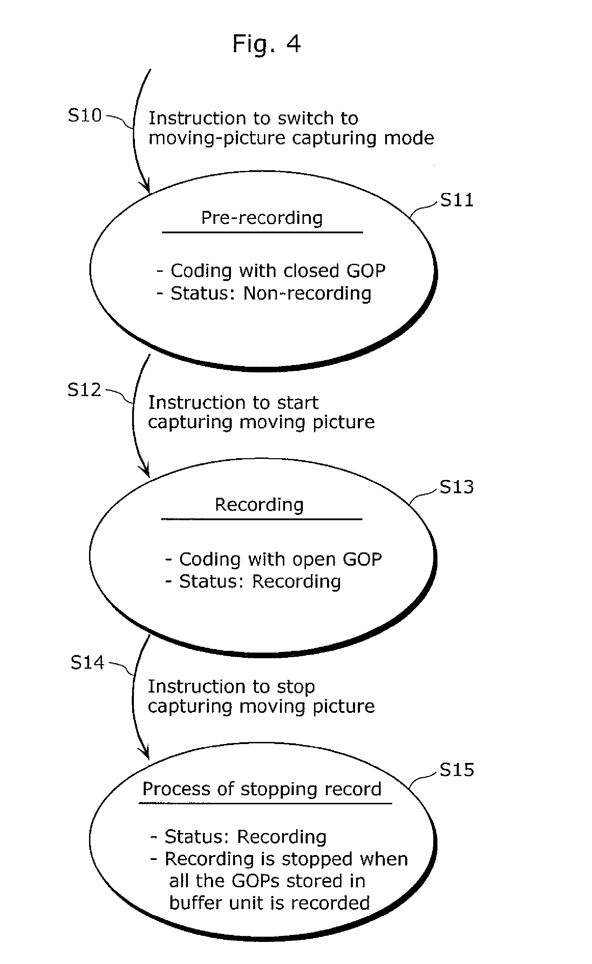

Fig. 4 is a state transition diagram regarding operation of recording a moving-picture signal by the digital video camera 20 according to the present embodiment. Fig. 4 summarizes the above description with reference to Fig. 1 to Fig. 3.

First, a user performs an operation to give an instruction, such as an instruction to switch to moving-picture capturing mode (S10), and then the digital video camera 20 starts pre-recording (S11). Specifically, the coding unit 11 starts and continues coding with a closed GOP structure according to an instruction provided from the recording control unit 12b, and the data switch 17 remains off (non-recording status) according to an instruction provided from the recording control unit 12b. In S11, coding is thereby continued with the closed GOP, while the recording in the recording unit 13 is not performed.

Next, when the user performs an operation to give an instruction to start recording a moving picture (S12), the digital video camera 20 records coded data (S13). Specifically, the coding unit 11, switching from the closed GOP structure to an open GOP structure, continues the coding with the open GOP structure according to an instruction provided from the recording control unit 12b, and the data switch 17 switches from off (non-recording status) to on and remains on (recording status) according to an instruction provided from the recording control unit 12b. In S12, GOPs are recorded in the recording unit 13. The recording is started with a GOP which is a closed GOP outputted from the buffer unit 14 immediately after the instruction to start capturing a moving picture and continued with subsequent GOPs (four closed GOPs at the beginning and open GOPs subsequent to the four closed GOP).

Next, when the user performs an operation to give an instruction to stop recording a moving picture (S14), the digital video camera 20 performs a process of stopping the recording (S15). Specifically, the data switch 17, according to the instruction from the recording control unit 12b, remains on until all the GOPs then stored in the buffer unit 14 are recorded in the recording unit 13, and then switches to off when all the GOPs are completely recorded. In S15, the recording is thereby stopped when coded GOPs and all the GOPs stored in the buffer unit 14 at the time of the instruction to stop the recording are recorded in the recording unit 13.

The digital video camera according to the present embodiment thus starts recording GOPs necessarily with a closed GOP, so that there is no need for prepending a dummy GOP as in the case of the conventional technique. As a result, degradation in picture quality due to a dummy GOP is avoided. Furthermore, since the four closed GOPs are followed by the open GOPs in the recording, the digital video camera according to the present embodiment records a moving picture with high picture quality.

The digital video camera and the image coder according to the present invention have been described above based on one embodiment. However, the present invention is not limited to this embodiment. The scope of the present invention includes variations of the present embodiment, embodiments configured by combining components in variations of the present embodiment, and embodiments which those skilled in the art configures by modifying these embodiments.

Furthermore, although only closed GOPs are generated in pre-recording in the present embodiment, pre-recording according to the present invention is not limited to such pre-recording and a GOP sequence generated in pre-recording may include an open GOP in addition to a closed GOP.

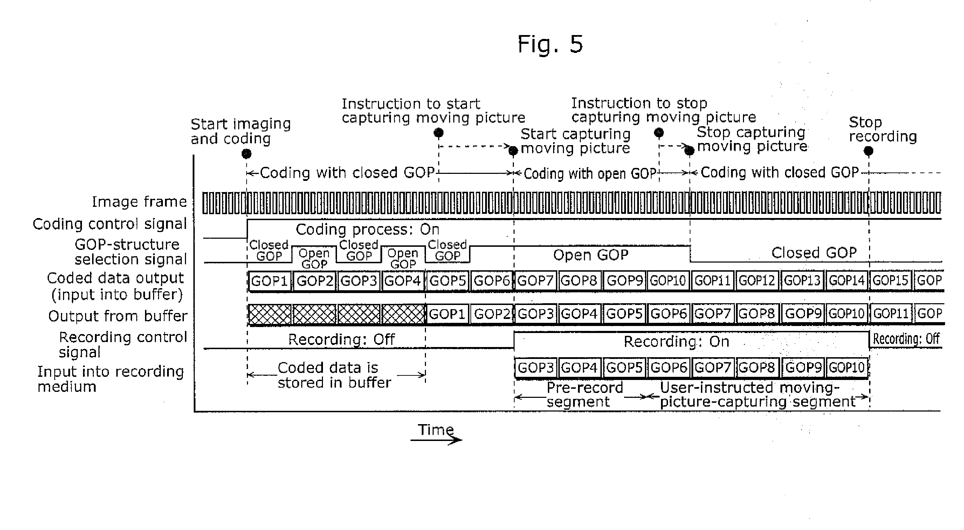

Fig. 5 shows timing of record control of a digital video camera which generates a GOP sequence including both closed GOPs and open GOPs in pre-recording, that is, a digital video camera according to another embodiment of the present invention. In pre-recording in this case, as shown in the row of "Coded data output (input into buffer)", the coding unit 11 codes a moving-picture signal so that closed GOPs and open GOPs are alternately generated. When the user I/F unit 12a receives an instruction to start recording a moving picture, the recording control unit 12 then causes the data switch 17 to switch from off to on so that a GOP sequence starting with an initial closed GOP to be outputted from the buffer unit 14 after the instruction is recorded in the recording unit 13. As a result, as shown in the row of "Input into recording medium", a GOP sequence starting with the initial closed GOP outputted from the buffer unit 14 after the instruction (GOP3 in this case) is recorded in the recording unit 13.

Since this recording is started with a closed GOP, there is no need for prepending a dummy GOP as in the case of the conventional technique. Furthermore, since the GOPs generate in the pre-recording include open GOPs in addition to closed GOPs, picture quality of a moving picture of coded data generated in the pre-recording is enhanced.

Furthermore, although the closed GOP in the present embodiment starts with a B picture, structures of closed GOPs according to the present invention are not limited to such a structure. Closed GOPs may start with an I picture.

Furthermore, GOPs generated by the coding unit 11 may be made up of a predetermined number of pictures and have a dynamic structure in which a picture for intra picture coding (I picture) is inserted when a major change is detected between pictures.

Furthermore, although the digital video camera according to the present embodiment above is implemented as integrated circuits, the components such as the coding unit 11, the control unit 12, and the data switch 17 may be implemented as a program executed on a general-purpose computer having a CPU and a ROM or a RAM in which the program is stored.

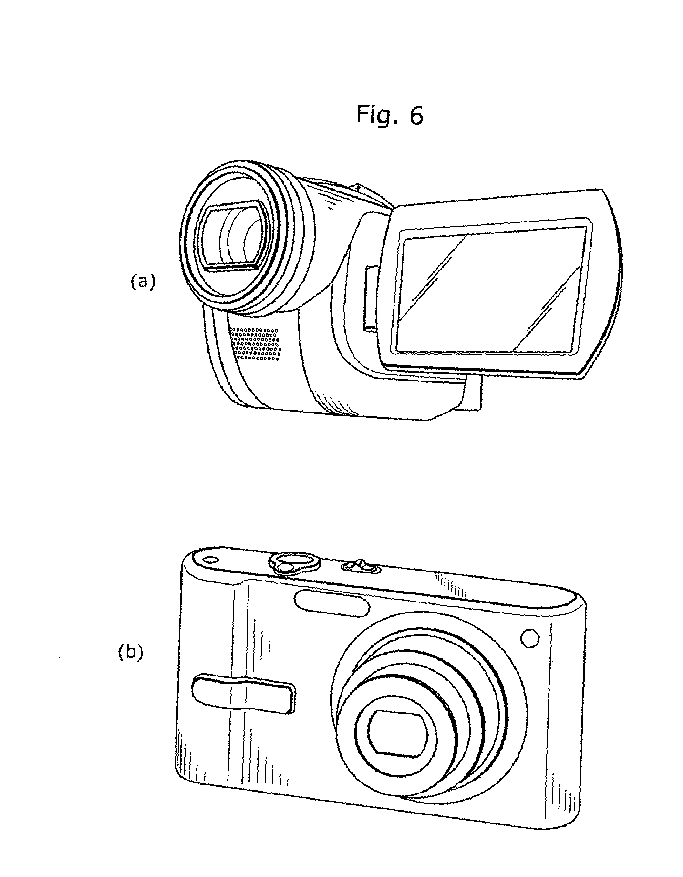

Furthermore, the image coder and the video camera according to the present invention are applicable not only to digital video cameras for capturing a moving picture as shown in (a) of Fig. 6 but also to still cameras as shown in (b) of Fig. 6 to provide them with a function of capturing a moving picture.

### [Industrial Applicability]

The image coder according to the present invention is applicable to video encoders with a pre-record function and particularly to digital video cameras with a pre-record function for recording a moving picture with high picture quality.

## Claims

1. (Currently amended) An image coder which codes a moving-picture signal transmitted from an imaging unit and records the coded moving-picture signal on a recording medium, said image coder comprising:
a coding unit configured to code the moving-picture signal so as to generate groups of pictures (GOPs), each of the GOPs being a closed GOP or an open GOP;
a buffer unit in which at least one of the GOPs generated by said coding unit is stored in a first-in first-out manner;
a user interface unit configured to receive an instruction to start capturing a moving picture and an instruction to stop capturing a moving picture; and
a recording control unit configured to (1) control said coding unit and (2) establish one of a recording status and a non-recording status according to the respective instructions received by said user interface unit, the recording status being a status in which the GOPs outputted from said buffer unit are recorded on the recording medium, and the non-recording status being a status in which the GOPs are not recorded on the recording medium,
wherein said recording control unit is configured to,
before said user interface unit receives the instruction to start capturing a moving picture, establish the non-recording status and cause said coding unit to start and continue coding the moving-picture signal so that said coding unit generates a GOP sequence which includes a closed GOP, and
when said user interface unit receives the instruction to start capturing a moving picture, switch from the non-recording status to the recording status and cause said coding unit to generate a GOP sequence which includes only open GOPs.

2. The image coder according to Claim 1,
wherein said recording control unit is configured to, when said user interface unit receives the instruction to stop capturing a moving picture, hold the recording status until all of the at least one GOP then stored in said buffer unit is recorded on the recording medium, and then, when the recoding of all of the at least one GOP is completed, switch from the recording status to the non-recording status.

3. The image coder according to Claim 1,
wherein said recording control unit is configured to, before said user interface unit receives the instruction to start capturing a moving picture, cause said coding unit to generate a GOP sequence which includes only closed GOPs.

4. The image coder according to Claim 1,
wherein said recording control unit is configured to, when said user interface unit receives the instruction to start capturing a moving picture, switch from the non-recording status to the recording status and cause said coding unit to generate a GOP sequence which includes only open GOPs, so that a GOP sequence starting with a closed GOP which is an initial closed GOP to be outputted from said buffer unit after the reception of the instruction, is recorded on the recording medium.

5. The image coder according to Claim 1,
wherein said recording control unit is configured to, before said user interface unit receives the instruction to start capturing a moving picture, cause said coding unit to start coding the moving-picture signal when said recording control unit detects an event which has occurred inside or outside of said image coder.

6. The image coder according to Claim 1,
wherein said recording control unit is configured to switch between the recording status and the non-recording status by switching between a status in which GOPs outputted from said buffer unit are inputted into a recording unit which records the GOPs on the recording medium and a status in which GOPs outputted from said buffer unit are not inputted into the recording unit.

7. A digital video camera comprising:
an imaging unit configured to output a moving-picture signal; and
the image coder according to Claim 1 which codes the moving-picture signal transmitted from said imaging unit and records the coded moving-picture signal on a recording medium.

8. An integrated circuit comprising a semiconductor substrate on which said coding unit, said user interface unit, and said recording control unit of the image coder according to Claim 1 are formed.

9. An image coding method in which a moving-picture signal transmitted from an imaging device is coded and the coded moving-picture signal is recorded on a recording medium, said image coding method comprising:
coding the moving-picture signal so as to generate groups of pictures (GOPs), each of the GOPs being a closed GOP or an open GOP;
storing at least one of the GOPs generated in said coding in a buffer unit in a first-in first-out manner;
receiving an instruction to start capturing a moving picture and an instruction to stop capturing a moving picture; and
(1) controlling said coding and (2) establishing one of a recording status and a non-recording status according to the respective instructions received in said receiving, the recording status being a status in which the GOPs outputted from the buffer unit are recorded on the recording medium, and the non-recording status being a status in which the GOPs are not recorded on the recording medium,
wherein, in said controlling,
before said receiving of the instruction to start capturing a moving picture, establishing the non-recording status and causing said coding of the moving-picture signal to start and continue so that a GOP sequence which includes a closed GOP is generated, and
when the instruction to start capturing a moving picture is received in said receiving, the non-recording status is switched to the recording status and a GOP sequence which includes only open GOPs is generated in said coding of the moving picture.

## Amended claims

### Amended claims in accordance with Rule 137(2) EPC.

**1.** (Currently amended) An image coder which codes a moving-picture signal transmitted from an imaging unit and records the coded moving-picture signal on a recording medium, said image coder comprising:
a coding unit configured to code the moving-picture signal so as to generate groups of pictures (GOPs), each of the GOPs being a closed GOP or an open GOP;
a buffer unit in which at least one of the GOPs generated by said coding unit is stored in a first-in first-out manner;
a user interface unit configured to receive an instruction to start capturing a moving picture and an instruction to stop capturing a moving picture; and
a recording control unit configured to (1) control said coding unit and (2) establish one of a recording status and a non-recording status according to the respective instructions received by said user interface unit, the recording status being a status in which the GOPs outputted from said buffer unit are recorded on the recording medium, and the non-recording status being a status in which the GOPs are not recorded on the recording medium,
wherein said recording control unit is configured to,
before said user interface unit receives the instruction to start capturing a moving picture, establish the non-recording status and cause said coding unit to start and continue coding the moving-picture signal so that said coding unit generates a GOP sequence which includes a closed GOP, and
when said user interface unit receives the instruction to start capturing a moving picture, switch from the non-recording status to the recording status and cause said coding unit to generate a GOP sequence which includes only open GOPs, so that a GOP sequence starting with a closed GOP which is an initial closed GOP to be outputted from said buffer unit after the reception of the instruction, is recorded on the recording medium.

**2.** The image coder according to Claim 1,
wherein said recording control unit is configured to, when said user interface unit receives the instruction to stop capturing a moving picture, hold the recording status until all of the at least one GOP then stored in said buffer unit is recorded on the recording medium, and then, when the recoding of all of the at least one GOP is completed, switch from the recording status to the non-recording status.

**3.** The image coder according to Claim 1,
wherein said recording control unit is configured to, before said user interface unit receives the instruction to start capturing a moving picture, cause said coding unit to generate a GOP sequence which includes only closed GOPs.

**4.** (Canceled)

**5.** The image coder according to Claim 1,
wherein said recording control unit is configured to, before said user interface unit receives the instruction to start capturing a moving picture, cause said coding unit to start coding the moving-picture signal when said recording control unit detects an event which has occurred inside or outside of said image coder.

**6.** The image coder according to Claim 1,
wherein said recording control unit is configured to switch between the recording status and the non-recording status by switching between a status in which GOPs outputted from said buffer unit are inputted into a recording unit which records the GOPs on the recording medium and a status in which GOPs outputted from said buffer unit are not inputted into the recording unit.

**7.** A digital video camera comprising:
an imaging unit configured to output a moving-picture signal; and
the image coder according to Claim 1 which codes the moving-picture signal transmitted from said imaging unit and records the coded moving-picture signal on a recording medium.

**8.** An integrated circuit comprising a semiconductor substrate on which said coding unit, said user interface unit, and said recording control unit of the image coder according to Claim 1 are formed.

**9.** (Currently amended) An image coding method in which a moving-picture signal transmitted from an imaging device is coded and the coded moving-picture signal is recorded on a recording medium, said image coding method comprising:
coding the moving-picture signal so as to generate groups of pictures (GOPs), each of the GOPs being a closed GOP or an open GOP;
storing at least one of the GOPs generated in said coding in a buffer unit in a first-in first-out manner;
receiving an instruction to start capturing a moving picture and an instruction to stop capturing a moving picture; and
(1) controlling said coding and (2) establishing one of a recording status and a non-recording status according to the respective instructions received in said receiving, the recording status being a status in which the GOPs outputted from the buffer unit are recorded on the recording medium, and the non-recording status being a status in which the GOPs are not recorded on the recording medium,
wherein, in said controlling,
before said receiving of the instruction to start capturing a moving picture, establishing the non-recording status and causing said coding of the moving-picture signal to start and continue so that a GOP sequence which includes a closed GOP is generated, and
when the instruction to start capturing a moving picture is received in said receiving, the non-recording status is switched to the recording status and a GOP sequence which includes only open GOPs is generated in said coding of the moving picture, so that a GOP sequence starting with a closed GOP which is an initial closed GOP to be outputted from said buffer unit after the receiving of the instruction, is recorded on the recording medium.
